# EUROPEAN PATENT APPLICATION

(11) **EP 1 201 167 A2**
(43) Date of publication of application: **02.05.2002**
(21) Application number: 01500246.2
(22) Date of filing: 16.10.2001
(51) Int. Cl.: A47J 37/06

(54) **Module, particularly for gridiron cookers, gas barbecues or the like**

(30) Priority: 19.10.2000 ES 200002501
(71) Applicant: Mirror Maquinaria Industrial Restauracion Rapida y Organizacion de Restaurantes S.A., 08907 L'Hospitalet de Llobregat (ES)
(72) Inventor: Gil Garcia, Vicente, 08907 L'Hospitalet de Llobregat (ES)
(74) Representative: Ponti Sales, Adelaida

(57) **Abstract**

It comprises a plate (1) fitted above the burners (8) for the accumulation and diffusion of heat and the creation of smoke produced by the contact of the drops of fat from the food (4, the plate (1) being made of cast iron and having a surface made up of a plurality of geometric figures (3) that facilitate slippage of the drops of fat from the foods (4) and including a plurality of orifices (6) distributed over the surface of said module in order to permit the passage of the flames (7) from the gas burners (8) .

## Description

This invention relates to a module, particularly for gridiron cookers, gas barbecues or the like, for cooking foods.

### BACKGROUND OF THE INVENTION

There exist at present on the market a wide range of gridiron cookers and barbecues for the cooking of foods, such as meat or fish products. Said gridiron cookers are made up structurally of different modules located in a housing, which consist principally of a gas burner situated in the lower part, an upper gridiron by way of mesh on which the foods to be cooked are placed and a gridiron situated in the intermediate part which acts as a support for the placement of volcanic stone or prefabricated ceramic pieces. This stone and pieces are used especially for accumulating and dispensing heat, and for the formation of smoke.

On the other hand, there is also the possibility of replacing the stones and ceramic pieces by a metal element or diffuser taking the shape of a tile or inverted "V".

The use of volcanic stones nevertheless has the main disadvantage that the pores that form its surfaces become filled with burnt fat given off by the foods as they are cooked, thus producing an unpleasant odour. Moreover, the fat ends up blocking the outlets of gas from the burners. Owing to the pores of the stones becoming blocked, users of gridiron cookers with this system are obliged to replace those stones regularly with new ones.

In the same way, the use of prefabricated ceramic pieces has the disadvantage that they are very fragile and have little resistance to the temperature changes that take place when droplets of cold fat come into contact with said pieces. This fact considerably reduces their useful life and the duration of the effects of accumulated and dispensing heat, which is a main characteristic, and, as occurs with the volcanic stones, the ceramic pieces have to be replaced frequently.

Finally, the use of tile-shaped pieces has the main disadvantage of totally covering the burner and the flames, so that the effect on the food is of cooking in an oven and not on a gridiron. This is due to the fact that the food does not receive the flames from the burner directly because the piece totally covers the lower part of the gridiron.

### DESCRIPTION OF THE INVENTION

The objective of the module of this invention is to solve the aforementioned disadvantages presented by the gas gridiron cookers and barbecues known in the state of the art, providing a number of advantages that are described below.

The module of the invention is of the type that comprises a plate fitted above the burners for the accumulation and diffusion of heat and the creation cf smoke produced by the contact of the drops of fat from the food, characterised in that the plate is of cast iron and has a surface made up of a plurality of geometric figures that facilitate slippage of the drops of fat from the foods and includes a plurality of orifices distributed over the surface of said module in order to permit the passage of the flames from the gas burners.

Thanks to these characteristics, a module is obtained which partially covers the zone of the burner and, thanks to the presence of the orifices, facilitates the passage of the flames from the burner towards the foods, providing as a final result barbecue-cooked foods. The orifices permit the evacuation of the drops of fat from the foods without obstructing the outlets of the flames from the gas burner. If to all this we add the fact that it can be fitted and taken apart easily, cleaned easily and manufactured at low cost due to its being an easily made cast piece, it is clear that the module of the invention is highly advantageous in comparison with the current state of the art.

Preferably, the geometric figures have substantially pyramidal shape that considerably facilitates the falling of fat from the foods.

### BRIEF DESCRIPTION OF THE DRAWINGS

In order to facilitate the description of all that has been set out above, some drawings are attached which, schematically and solely by way of non-restrictive example, show a practical case of embodiment of the modules of the invention. In them:

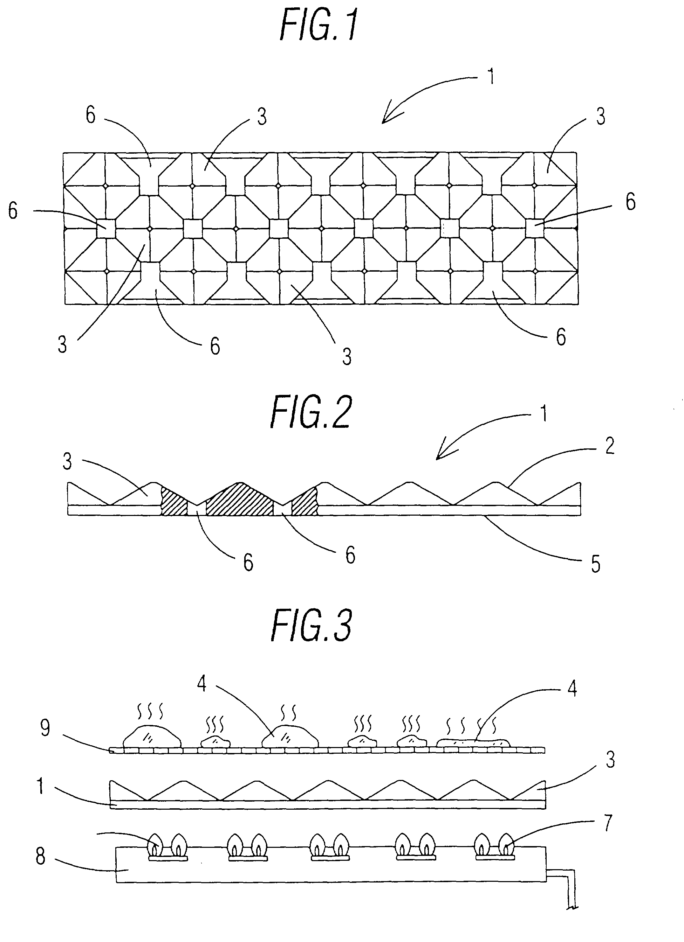

Figure 1 is a plan view of the module of the invention; figure 2 is a partially sectioned elevation view of the aforesaid module; and figure 3 is an elevation view of an exploded unit showing the various components that form a barbecue fitted with the module of the invention.

### DESCRIPTION OF A PREFERRED EMBODIMENT

As shown in Figures land 2, the module of the invention for gridiron cookers and barbecues comprises a plate 1 made of cast iron, of rectangular plan, which has an upper surface 2 made up of a plurality geometrical figures 3 which facilitate the sliding of the drops of fat released by cooking of foods 4, such as meat or fish, while on the lower side it has a flat surface 5 which helps to accumulate a larger quantity of heat.

Said plate, due to its being made of iron, permits the accumulation and diffusion of heat, together with the creation of smoke due to the contact of the drops of fat from the foods 4 with the plate 1, in addition to it being resistant to the temperature changes produced by the falling of the cold drops of fat.

The geometrical figures 3 of the module of the invention have substantially pyramidal shape with the corners bevelled.

Said plate 1 also includes a plurality of orifices 6 distributed regularly across it and that permit, on the one hand, the partial passage of the flames 7 coming from the various openings of the burner 8 and, on the other hand, facilitate the falling of the drops of fat.

Figure 3 shows how the plate 1 is located between the burner 8 of the barbecue and the gridiron 9 on which the foods 4 are placed.

Independent of the object of this invention are the materials used in manufacturing of the parts which make up the module described, and the shapes and dimensions of same and all accessory details it might have, which may be replaced by others that are technically equivalent, as long as they do not effect its essential nature nor depart from the sphere defined in the claims attached below.

## Claims

1. Module, particularly for gridiron cookers, gas barbecues or the like, that comprises a plate (1) fitted above the burners (8) for the accumulation and diffusion of heat and the creation of smoke produced by the contact of the drops of fat from the food (4), **characterised in that** the place (1) is of cast iron and has a surface made up of a plurality of geometric figures (3) that facilitate slippage of the drops of fat from the foods (4) and includes a plurality of orifices (6) distributed over the surface of said module in order to permit the passage of the flames (7) from the gas burners (8).

2. Module, as claimed in Claim 1, **characterised in that** the geometric figures (3) have substantially pyramidal shape.
